(19) Europäisches Patentamt
European Patent Office
Office européen des brevets

(11) **EP 3 174 260 A1**

(12) **EUROPEAN PATENT APPLICATION**

(43) Date of publication:
**31.05.2017 Bulletin 2017/22**

(51) Int Cl.:
***H04L 27/26*** *(2006.01)*

(21) Application number: **16193073.0**

(22) Date of filing: **10.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.11.2015 TW 104139718**

(71) Applicant: **MStar Semiconductor, Inc.**
**Chupei 302 (TW)**

(72) Inventors:
• **Dornstetter, Jean-Louis**
**78460 Choisel (FR)**

• **Wang, Kun-Yu**
**302 Chupei (TW)**
• **Lai, Ko-Yin**
**302 Chupei (TW)**
• **Tung, Tai-Lai**
**302 Chupei (TW)**
• **Liao, Yi-Ying**
**302 Chupei (TW)**

(74) Representative: **Mollekopf, Gerd Willi**
**Kahler Käck Mollekopf**
**Partnerschaft von Patentanwälten mbB**
**Vorderer Anger 239**
**86899 Landsberg/Lech (DE)**

(54) **CIRCUIT AND METHOD FOR DETECTING CARRIER FREQUENCY OFFSET**

(57) A circuit (400, 700, 800) for detecting a carrier frequency offset includes: a Golay matched filter (300; 410, 420, 430), filtering an input signal according to a set of coefficients ($w_n$) to generate an output signal, wherein the set of coefficients is associated with a Golay complementary sequence corresponding to the input signal; and a determination circuit (440), determining a peak value of the output signal, and determining the carrier frequency offset according to a carrier number corresponding to the peak value.

**FIG. 3**

**Description**

**BACKGROUND OF THE INVENTION**

Field of the Invention

The invention relates in general to a circuit and method for detecting a carrier frequency offset, and more particularly to a circuit and method for detecting a carrier frequency offset of a Digital Video Broadcasting - Terrestrial Generation 2 (DVB-T2) system.

Description of the Related Art

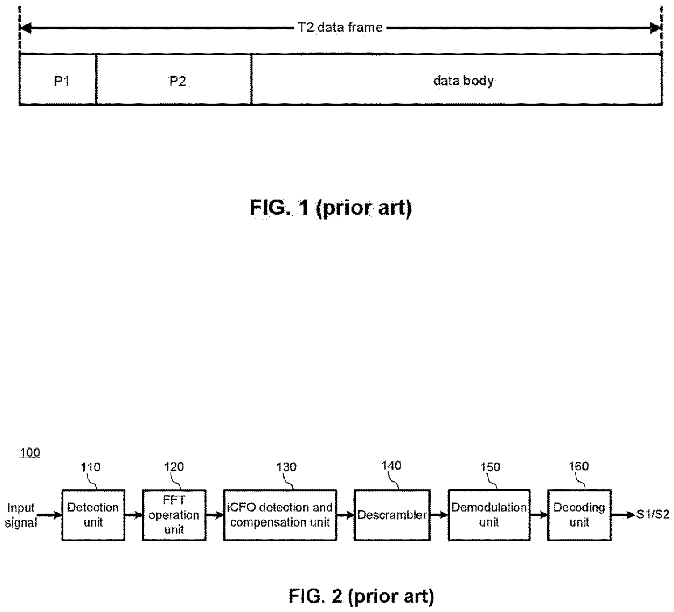

FIG. 1 shows a format of a data frame of a DVB-T2 system. Each data frame includes a P1 symbol, a P2 symbol and a data body. The P1 symbol includes information of the transmitter, e.g., information of a fast Fourier transform (FFT) mode used for modulation and an input/output mode of transmission/reception. Further, the P1 symbol may be used to detect a data stream, e.g., a starting position of the data frame, a value of the carrier frequency offset and a condition of spectral inversion.

FIG. 2 shows a block diagram of a P1 symbol processing circuit of a DVB-T2 receiver. A detection unit 110 of the P1 symbol processing circuit 100 performs detection of data frame synchronization and spectral inversion on the input signal, and the input signal is transformed from the time domain to the frequency domain by an FFT operation unit 120. Next, an integer carrier frequency offset (iCFO) detection and compensation unit 130 performs iCFO detection and compensation on the input signal, and a descrambler 140 performs a descrambling process on the input signal to restore it to a standard television signal. A demodulation unit 150 then performs a demodulation process, and a decoding unit 160 performs a decoding process to generate a codeword S1 and a codeword S2. According to the codeword S1 and the codeword S2, information adopted for information modulation can be correspondingly obtained.

In a conventional method, the iCFO detection and compensation unit 130 uses an exhaustive search procedure to identify the iCFO; that is, the input signal is compensated according to all possible offset values, a correlation level between the compensated input signal and the corresponding carrier distribution sequence (CDS) is calculated, and the offset value corresponding to the maximum correlation level is used as the estimated result of the iCFO. However, above method requires a long waiting period that may cause latency and hence reduced performance of the receiving circuit.

**SUMMARY OF THE INVENTION**

It is an object of the present invention to provide a circuit and method for detecting a carrier frequency offset to accelerate the detection speed.

The invention is defined in claims 1, 8 and 12, respectively. Particular embodiments are set out in the dependent claims.

The present invention discloses a carrier frequency offset detection circuit including: a Golay matched filter, filtering an input signal according to a set of coefficients to generate an output signal, wherein the set of coefficients is associated with a Golay complementary sequence; and a determination circuit, determining a peak value of the output signal, and determining a carrier frequency offset value according to a carrier number corresponding to the peak value.

The present invention further discloses a detection circuit including: a first filter, filtering first-part carriers of an input signal to generate a first output signal, wherein the first-part carriers correspond to a first Golay complementary sequence; a second filter, filtering second-part carriers of the input signal to generate a second output signal, wherein the second-part filters correspond to a second Golay complementary sequence; a third filter, filtering third-part carriers of the input signal to generate a third output signal, wherein the third-part carriers correspond to a third Golay complementary sequence; and a determination circuit, determining a peak value of a sum of the output signals, and determining a carrier frequency offset value according to a carrier number corresponding to the peak value.

The present invention further discloses a carrier frequency offset detection method including: filtering an input signal by a Golay matched filter according to a set of coefficients to generate an output signal, wherein the set of coefficients is associated with a Golay complementary sequence of the input signal; determining a peak value of the output signal; and determining a carrier frequency offset value according to a carrier number corresponding to the peak value.

The carrier frequency offset detection circuit and method of the present invention, by using the carrier distribution sequence of the P1 symbol, are capable of quickly detecting the value of the carrier frequency offset with corresponding filtering coefficients and filters. As opposed to a conventional method, the present invention reduces a large amount of multiplication operations, and enhances the performance of the DVB-T2 receiving circuit.

The above and other aspects of the invention will become better understood with regard to the following detailed description of the preferred but non-limiting embodiments. The following description is made with reference to the accompanying drawings.

**BRIEF DESCRIPTION OF THE DRAWINGS**

FIG. 1    is a schematic diagram of a T2 data frame in a DVB-T2 system;

FIG. 2    is a block diagram of a P1 symbol processing circuit of a DVB-T2 receiver;

FIG. 3    is a Golay matched filter;

FIG. 4    is an iCFO detection circuit according to an embodiment of the present invention;

FIG. 5    is a diagram of correspondence between carrier numbers of a carrier distribution sequence of the P1 symbol and an integral frequency offset that the P1 symbol encounters;

FIG. 6    is a flowchart of a carrier frequency offset detection method according to an embodiment of the present invention;

FIG. 7    is an iCFO detection circuit according to another embodiment of the present invention; and

FIG. 8    is an iCFO detection circuit according to another embodiment of the present invention.

**DETAILED DESCRIPTION OF THE INVENTION**

The disclosure of the application includes a carrier frequency offset detection circuit and method. In possible implementation, one person skilled in the art may choose equivalent elements or steps of realize the present invention based on the disclosure of the application. That is, the implementation of the present invention is not limited to the non-limiting embodiments below.

In particular, a circuit for detecting a carrier frequency offset according to the invention includes: a Golay matched filter, filtering an input signal according to a set of coefficients to generate an output signal, wherein the set of coefficients is associated with a Golay complementary sequence corresponding to the input signal; and a determination circuit, determining a peak value of the output signal, and determining the carrier frequency offset according to a carrier number corresponding to the peak value.

As defined by the DVB-T2 specification, the P1 symbol includes 1024 carriers. Excluding the part of the guard band, there are 853 available carriers (corresponding to carrier numbers 0 to 852), among which 768 carriers (corresponding to carrier numbers 44 to 811) are carriers currently in use for transmitting an encoded codeword CSS1 and an encoded codeword CSS2. The encoded codeword CSS1 and the encoded codeword CSS2 are encoded results of a codeword S1 and a codeword S2 of the transmitter. One half of the foregoing 768 carriers are active carriers, while the other half are inactive carriers (with a value 0). The carrier numbers of the active and inactive carriers are defined by CDS in the DVB-T2 specification, with 1 defining an active carrier and 0 defining an inactive carrier. This carrier distribution sequence (a total of 768 bits) is in fact consisted of 3 Golay complementary sequences (GCS), as shown by Table-1:

Table-1

| Golay complementary sequence | Position in carrier distribution sequence | Contents |
|---|---|---|
| GCS1 | Consecutive 128 bits with smaller carrier numbers | (X, Y, ... , X, Y) |

(continued)

| Golay complementary sequence | Position in carrier distribution sequence | Contents |
| --- | --- | --- |
| GCS2 | Consecutive 512 bits with middle carrier numbers | (X, Y, ... , X, Y, X, Y, X, ..., Y, X, Y, ...., X, Y" ...,X, ..., Y, ..., X, Y) |
| GCS3 | Consecutive 128 bits with larger carrier numbers | (Z, T, Z, ..., T) |

In Table-1, X, Y, Z and T are 32-bit sample sequences, as shown in Table-2:

Table-2

| Sample sequence | Contents |
| --- | --- |
| X | 11010001001000010010111000100001 |
| Y | 00101110110111100010111000100001 |
| z | 10000100100010110111101110001011 |
| T | 01111011011101000111101110001011 |

According to the publication by B. M. Popovic, "Efficient Golay correlator," IEEE Elec. Lett., vol. 35, no. 17, pp. 1427-1428, Aug. 1999, a Golay complementary sequence may be generated by iteration based on equations below:

$$a_0[k] = b_0[k] = \delta[k] \qquad \dots\dots \quad (1)$$

$$a_n[k] = a_{n-1}[k] + w_n \cdot b_{n-1}[k - 2^{n-1}] \quad \dots\dots \quad (2)$$

$$b_n[k] = a_{n-1}[k] - w_n \cdot b_{n-1}[k - 2^{n-1}] \quad \dots\dots \quad (3)$$

In the above equations, k is an index value, n represents an $n^{th}$ iteration. Initial values of the sequence $a_n$ and the $b_n$ sequence are $\delta[k]$, i.e., 1 when k=0 or are otherwise 0. The coefficient $w_n$ is one of + 1 and -1. When different coefficients $w_n$ are used, the Golay complementary sequences generated according to equations (1) to (3) are also different. In other words, by selecting an appropriate coefficient $w_n$, the iteration operation based on equations (1) to (3) may generate corresponding Golay complementary sequences.

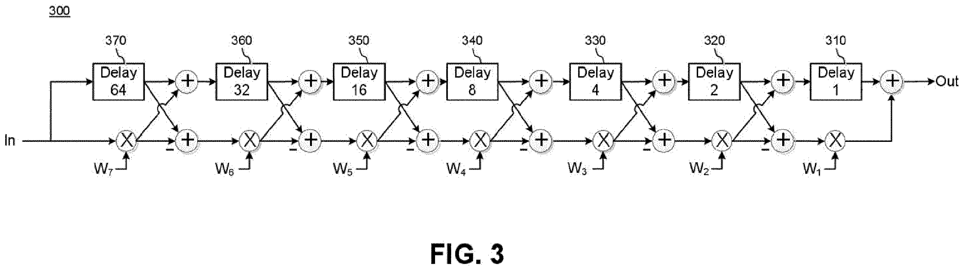

The above publication, "Efficient Golay correlator," further discloses a Golay matched filter, whose circuit diagram is as shown in FIG. 3. A Golay matched filter 300 includes 7 delay units 310 to 370, 7 multipliers and a plurality of adders. These components are connected to one another in a lattice structure commonly seen in a digital signal processor (DSP). The numbers denoted in the delay units 310 to 370 represent time units of respective delay periods, each of which being a time difference between two consecutive carriers in the P1 symbol. The delay periods of the 7 delay units are different, and are respectively $2^0$ to $2^6$ time units. In FIG. 3, the time units of delay periods of the delay units 310 to 370 increases from the output end Out towards the input end In. The above design is one possible implementation. In other embodiments, the delay units 310 to 370 may be presented in other arrangements. Each of the 7 multipliers has a coefficient $w_n$. Assuming that the 7 coefficients $w_1$ to $w_7$ from the output end Out to the input end In are sequentially equal to coefficients $w_1$. to $w_7$ of a corresponding Golay complementary sequence, when the sequence of the input signal is identical to the Golay complementary sequence, the output end Out generates an extremely large peak value. Conversely, when the sequence of the input signal differs from the Golay complementary sequence, a value equal to or approximating 0 is obtained at the output end Out.

The present invention identifies the coefficients $w_n$ corresponding to the Golay complementary sequences GCS1 to GCS3, and determines the offset of the P1 symbol by using the characteristic of the above Golay matched filter, i.e., iCFO of the P1 symbol. The coefficients $w_n$ corresponding to the 3 Golay complementary sequences in Table-1 are as shown in Table-3.

Table-3

| Golay complementary sequence | Coefficient $w_n$ |
|---|---|
| GCS1 | $(w_1, w_2, ..., w_7$ (+1,-1,-1,-1,-1,-1,-1) |
| GCS2 | $(w_1, w_2, ..., w_9) = $ (+1,-1,-1,-1,-1,-1,-1,+1,+1) |
| GCS3 | $(w_1, w_2, ..., w_7) = $ (-1,-1,-1,+1,-1,-1,+1) |

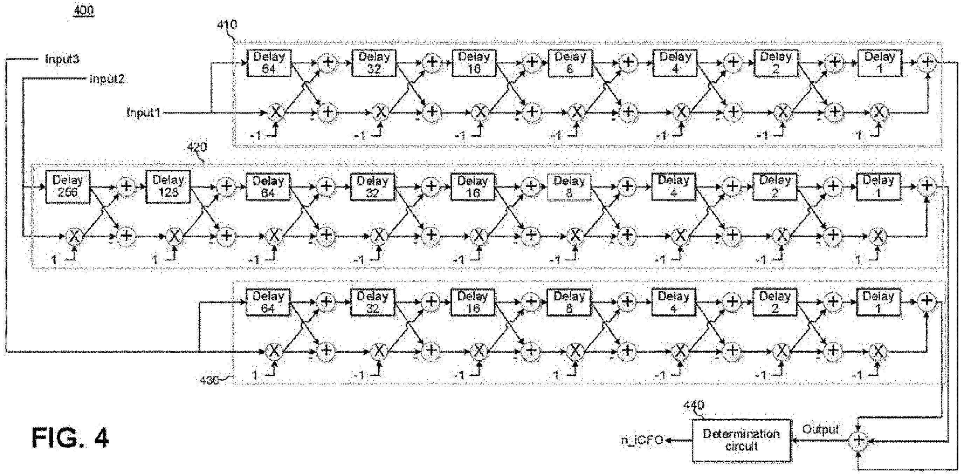

The Golay complementary sequences GCS1 and GCS3 are 128-bit, and so 7 coefficients $w_1$ to $w_7$ are needed; the Golay complementary sequence GCS2 is 512-bit, and so 9 coefficients $w_1$ to $w_9$ are needed. FIG. 4 shows an iCFO detection circuit according to an embodiment of the present invention. The iCFO detection circuit 400 includes Golay matched filters 410, 420 and 430, and a determination circuit 440. The Golay matched filters 410 and 430 respectively include 7 delay units, 7 multipliers and a plurality of adders. The Golay matched filter 420 includes 9 delay units, 9 multipliers and a plurality of adders. The Golay matched filters 410, 420 and 430 receive input signals Input1, Input2 and Input3, respectively, and filtered results of the three are added to form an output signal Output. The determination circuit 440 obtains a carrier frequency offset n_iCFO according to the output signal Output. The coefficients that the Golay matched filters 410, 420 and 430 adopt respectively correspond to the coefficients of the Golay complementary sequences GCS1, GCS2 and GCS3 in Table-3; that is, the Golay matched filters 410, 420 and 430 respectively correspond to the Golay complementary sequences GCS1, GCS2 and GCS3.

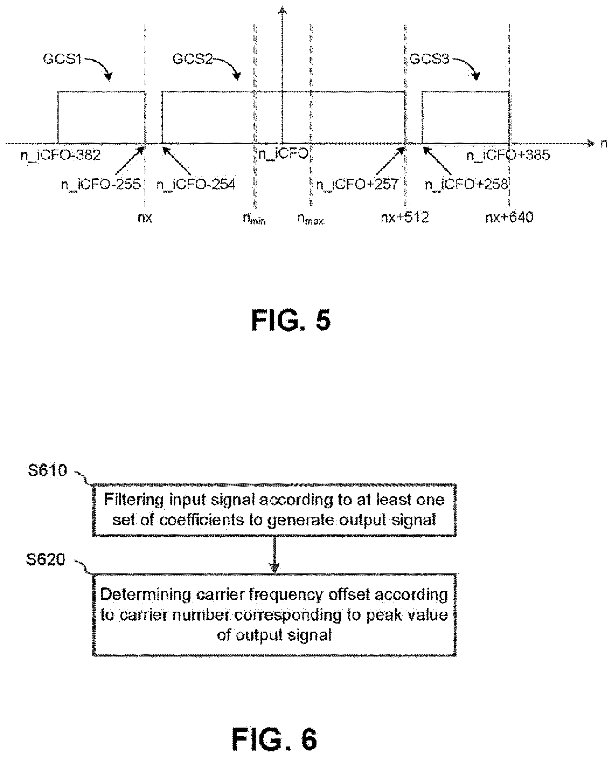

FIG. 5 shows correspondence between carrier numbers of the carrier distribution sequence and the integral frequency offset of the P1 symbol. The carrier number n_iCFO represents the offset of the integral part of the carrier frequency offset of the P1 symbol. Assuming that n_iCFO is 0, it means that the P1 symbol at this point does not contain carrier frequency offset that is in an integral part. The Golay complementary sequence GCS1 (corresponding to the carriers numbers n_iCFO-382 to n_iCFO-255), the Golay complementary sequence GCS2 (corresponding to the carriers numbers n_iCFO-254 to n_iCFO+257) and the Golay complementary sequence GCS3 (corresponding to the carriers numbers n_iCFO_+258 to n_iCFO+385) together from the carrier distribution sequence, and correspond to the Golay matched filters 410, 420 and 430, respectively. The carriers numbered n_iCFO-255, n_iCFO+257 and n_iCFO+385 are the last carriers (with the largest number) corresponding to the Golay complementary sequences GCS1, GCS2 and GCS3, respectively. When the carriers, starting from smaller carrier numbers, are caused to sequentially enter the Golay matched filters, the Golay matched filters 410, 420 and 430 output peak values when the carriers numbered n_iCFO-255, n_iCFL+257 and n_iCFO+385 are inputted, respectively. By adding the three peak values, the peak value of the output signal Output is obtained, and the carrier frequency offset is estimated according to the position of the peak value. Further, because the peak value of the output signal Output is in fact a sum of three peak values, such method allows obtaining one relative maximum value of the output signal Output for determination when errors occur in one or two of the filters or when a part of the input signal suffers from interference.

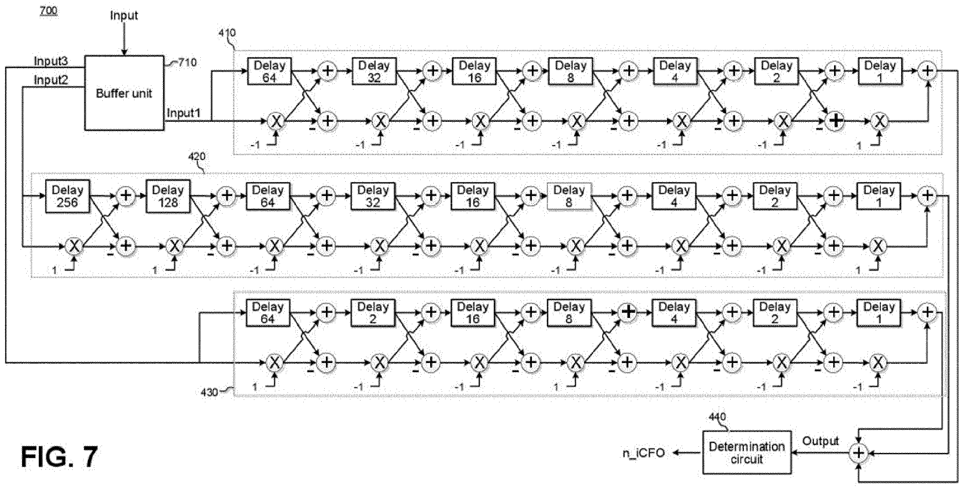

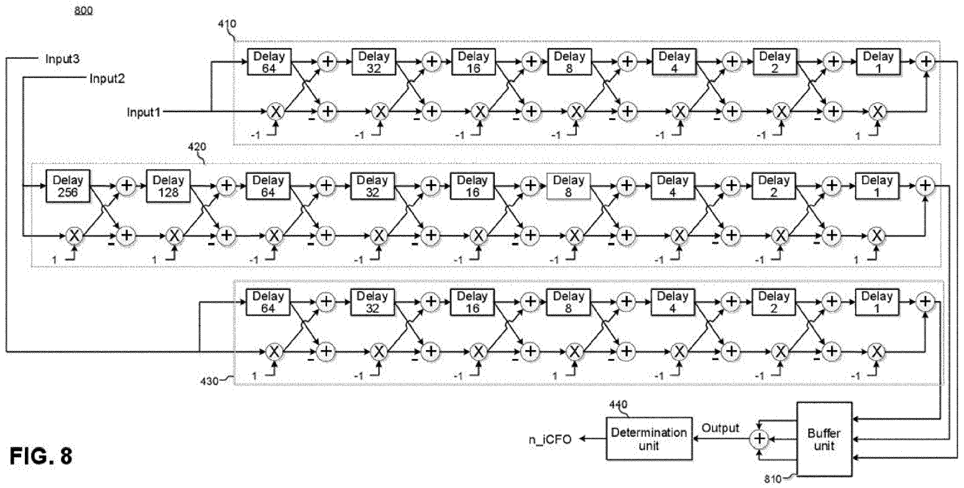

As previously described, the Golay matched filters 410, 420 and 430 successively perform filtering, and the three output values after filtering are added to obtain the output signal Output. In order to obtain the peak value of the output signal Output, the Golay matched filters 410, 420 and 430 are required to cause to input carriers numbered nx, nx+512 and nx+640 at the same time. It should be noted that, the total delay periods of the Golay matched filters 410, 420 and 430 are different (the Golay matched filters 410, 420 and 430 delay 127, 511 and 127 time units, respectively). Thus, in one embodiment, as shown by an iCFO detection circuit 700 in FIG. 7, the received carrier Input is first stored to a buffer unit 710, and at the same time the carriers, starting from the carriers numbered nx-511, nx+1 and nx+129, are respectively inputted to the Golay matched filters 410, 420 and 430. In another embodiment, the carriers received are first stored into the buffer unit 710, and the carriers, starting from the carrier numbered nx+1, are inputted into the Golay matched filter 420, and when the carrier numbered nx+385 is to be inputted into the Golay matched filter 420, the carriers, starting from the carriers numbered nx-127 and nx+513, are then inputted into the Golay matched filters 410 and 430, respectively. In yet another embodiment, as shown by an iCFO detection circuit 800 in FIG. 8, starting time points at which the carriers are inputted into the Golay matched filters 410, 420 and 430 may not be considered. Instead, respective output values of the three filters are stored at the output ends of the three filters using a buffer unit 810, and the output values generated by inputs corresponding to the carriers numbered nx, nx+512 and nx+640 are added to obtain the output signal Output.

In practice, a search interval [$n_{min}$, $n_{max}$] for the carrier frequency offset is usually set, and the position of the peak value outputted by the Golay matched filter 410 falls in the interval [$n_{min}$-255, $n_{max}$-255]. In order to have peak values occur simultaneously in the Golay matched filters 410, 420 and 430, according to the length of the maximum in the data amount of the Golay complementary sequences GCS1, GCS2 and GCS3 (i.e., 512 bits of GCS2), the lower limit of the interval [$n_{min}$-255, $n_{max}$-255] is shifted backward, and the carrier number interval [$n_{min}$-766, $n_{max}$-255] of the

input data of the Golay matched filter 410 is obtained. Similarly, $[n_{min}-254, n_{max}+257]$ and $[n_{min}-126, n_{max}+385]$ are obtained as the carrier number intervals of the input data of the Golay matched filter 420 and the Golay matched filter 430, respectively (i.e., $[n_{min}-766, n_{max}-255]$ are respectively shifted backward by 512 bits and 640 bits). The positions of the peak values and the ranges of the intervals are as shown in Table-4 below:

Table-4

| Golay matched filter | Position of peak outputted | Range of search interval corresponding to peak outputted | Interval of input data |
|---|---|---|---|
| 410 | nx | $[n_{min}-255, n_{max}-255]$ | $[n_{min}-766, n_{max}-255]$ |
| 420 | nx+512 | $[n_{min}+257, n_{max}+257]$ | $[n_{min}-254, n_{max}+257]$ |
| 430 | Nx+640 | $[n_{min}+385, n_{max}+385]$ | $[n_{min}-126, n_{max}+385]$ |

In conclusion, in order to have peak values occur simultaneously in the Golay matched filters 410, 420 and 430, the relationships of the carrier numbers of the input signals Input1, Input2 and Input3 are n, n+512 and n+640. Further, if a peak value of the output signal Output is present at a position corresponding to the carrier numbered nx, the determination circuit 440 may determine the position of the peak value, and accordingly determine that the carrier frequency offset is n_iCFO=nx+255.

It should be noted that, to save circuits, the carrier frequency offset may be detected according to only one or two of the Golay complementary sequences GCS1, GCS2 and GCS3. It is known from FIG. 5 that, according to only the Golay complementary sequence GCS2 (i.e., only the Golay matched filter 420 is used), the position of the carrier frequency offset is shifted to the left by 257 carrier numbers from the peak position that is determined by the determination circuit 440; according to only the Golay complementary sequence GCS3 (i.e., only the Golay matched filter 430 is used), the position of the carrier frequency offset is shifted to the left by 385 carrier numbers from the peak position that is determined by the determination circuit 440. When two of the Golay matched filters 410, 420 and 430 are used, the method for calculating the carrier frequency offset and the shift amounts of carrier numbers among the individual input signals can be deduced based on the foregoing description, and such details are omitted herein.

FIG. 6 shows a flowchart of a carrier frequency offset detection method according to an embodiment of the present invention. In addition to the foregoing carrier frequency offset detection circuit, the present invention correspondingly discloses a carrier frequency offset detection method, which includes following steps.

In step S610, an input signal is filtered according to at least one set of coefficients to generate an output signal. As previously stated, the three Golay complementary sequences included in the P1 symbol may be independently or together be used as a basis for calculating the carrier frequency offset. When filtering is performed in this step, the input signal is inputted into a Golay matched filter, and filtering is performed using any set of coefficients shown in Table-3. When the input signal matches the coefficients used, a peak value occurs in the output signal, and the carrier frequency offset may be estimated according to the position of this peak value. As shown in FIG. 5, when the coefficients of the Golay complementary sequence GCS1 are used, the position of the peak value differs from the carrier frequency offset by 255 carriers. Similarly, when the coefficients of the Golay complementary sequence GCS2 or GCS3 are used, the position of the peak value differs from the carrier frequency offset by 257 or 385 carriers. In this step, filtering may be performed by simultaneously using multiple sets of coefficients and multiple Golay matched filters, and the input signals of the Golay matched filters may be adjusted in advance such that the peak values of the Golay matched filters occur simultaneously, so as to benefit the determination for the position peak value.

In step S620, the carrier frequency offset is determined according to the carrier number corresponding to the peak value of the output signal. As shown in FIG. 5, according to the Golay complementary sequence that the previous step refers to (i.e., the coefficients used in step S610), the carrier frequency offset may be calculated according to the carrier number corresponding to the peak value of the output signal.

Using the above search interval $[n_{min},n_{max}]=[-122, 122]$, for the iCFO detection circuit 400 of the present invention, only $(n_{max}-255)-(n_{min}-766)+1=(122-255)-(-122-766)+1=756$ filtering operations need to be performed. Each of the filtering operations involves 23 multiplications (there are 23 multipliers in the Golay matched filters 410, 420 and 430), i.e., $756\times23=17388$ multiplications are performed, and the carrier frequency offset can be obtained. Further, these 23 multiplications multiply by only 1 or -1, which is beneficial to simplifying the circuit and increasing the operation speed. With the similar search interval, the conventional exhaustive search method needs to perform $(n_{max}-n_{min}+1)=255$ correlation operations, each of which including 1024 multiplications (as the P1 symbol includes 1024 carriers), and so a total of 255x1024=261120 multiplications are required. As opposed to the conventional method, the carrier frequency offset detection circuit and method significantly increase the detection speed.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

1.    A circuit (400, 700, 800) configured to detect a carrier frequency offset, comprising:

   a Golay matched filter (300; 410, 420, 430), configured to filter an input signal according to a set of coefficients ($w_n$) to generate an output signal, wherein the set of coefficients ($w_n$) is associated with a Golay complementary sequence corresponding to the input signal; and
   a determination circuit (440), configured to determine a peak value of the output signal, and to determine the carrier frequency offset according to a carrier number corresponding to the peak value.

2.    The circuit according to claim 1, wherein the Golay matched filter (300; 410, 430) comprises 7 delay units (310 - 370), and the Golay complementary sequence corresponds to 128 carriers in the input signal;
   wherein in particular the Golay matched filter (300; 410, 430) comprises 7 multipliers, and the set of coefficients ($w_n$) is one of (-1, -1, -1, +1, -1, -1, +1) and (+1, -1, -1, -1, -1, -1, - 1) that respectively correspond to the 7 multipliers sequentially arranged from an output end to an input end of the Golay matched filter.

3.    The circuit according to claim 1, wherein the Golay matched filter (420) comprises 9 delay units, and the Golay complementary sequence corresponds to 512 carriers in the input signal;
   wherein in particular the Golay matched filter (420) comprises 9 multipliers, and the set of coefficients ($w_n$) is (+1, -1,-1,-1, -1, -1, -1, + 1, + 1) that respectively correspond to the 9 multipliers sequentially arranged from an output end to an input end of the Golay matched filter.

4.    The circuit according to claim 1, 2 or 3, wherein the Golay matched filter (300; 410, 420, 430) is a first Golay matched filter (410), the set of coefficients ($w_n$) is a first set of coefficients, and the output signal is a first output signal, the circuit further comprising:

   a second Golay matched filter (420), configured to filter the input signal according to a second set of coefficients ($w_n$) to generate a second output signal; and
   a third Golay matched filter (430), configured to filter the input signal according to a third set of coefficients ($w_n$) to generate a third output signal;
   wherein, the determination circuit (440) is further configured to determine a peak value of a sum of the first, second and third output signals, and to determine the carrier frequency offset according to a carrier number corresponding to the peak value.

5.    The circuit according to claim 4, wherein the input signal at least comprises 768 carriers, and the first, second and third Golay matched filters (410, 420, 430) comprise 7, 9 and 7 delay units, respectively, and are configured to filter

   128 carriers with smaller carrier numbers,
   512 carriers with middle carrier numbers and
   128 carriers with larger carrier numbers among the 768 carriers, respectively.

6.    The circuit according to claim 5, wherein the first, second and third Golay matched filters (410, 420, 430) comprise 7, 9 and 7 multipliers, respectively,
   the first set of coefficients ($w_n$) is (+1, -1, -1, -1, -1, -1, -1) that respectively correspond to the 7 multipliers sequentially arranged from an output end to an input end of the first Golay matched filter (410),
   the second set of coefficients ($w_n$) is (+1, -1,-1, -1, -1, -1, -1, +1, +1) that respectively correspond to the 9 multipliers sequentially arranged from an output end to an input end of the second Golay matched filter (420), and
   the third set of coefficients ($w_n$) is (-1, -1, -1, +1, -1, -1, +1) that respectively correspond to the 7 multipliers sequentially arranged from an output end to an input end of the third Golay matched filter (430).

7. The circuit according to any of the previous claims, wherein a distribution of active and inactive carriers among a plurality of carriers of the input signal corresponds to the Golay complementary sequence.

8. A detection circuit (400, 700, 800), comprising:

    a first filter (410), configured to filter first-part carriers of the input signal to generate a first output signal, wherein the first-part carriers correspond to a first Golay complementary sequence;
    a second filter (420), configured to filter second-part carriers of the input signal to generate a second output signal, wherein the second-part carriers correspond to a second Golay complementary sequence;
    a third filter (430), configured to filter third-part carriers of the input signal to generate a third output signal, wherein the third-part carriers correspond to a third Golay complementary sequence; and
    a determination circuit (440), configured to determine a peak value of a sum of the first, second and third output signals, and to determine a carrier frequency offset according to a carrier number corresponding to the peak value.

9. The circuit according to claim 8,
    wherein the input signal comprises 768 carriers, the first-part carriers are 128 carriers with smaller carrier numbers among of the 768 carriers, the second-part carriers are 512 carriers with middle carrier numbers among the 768 carriers, and the third-part carriers are 128 carriers with larger carrier numbers among the 768 carriers; and/or each of the filters (410, 420, 430) is a Golay matched filter.

10. The circuit according to claim 8 or 9, wherein the first, second and third filters (410, 420, 430) comprise 7, 9 and 7 filters, respectively, and the 7, 9 and 7 multipliers sequentially correspond to a first set of coefficients (+1, -1, -1, -1, -1, -1, -1), a second set of coefficients (+1, -1, -1, -1, -1, -1, -1, +1, +1) and a third set of coefficients (-1, -1, -1, +1, -1, -1, +1), respectively.

11. The circuit according to claim 8, 9 or 10, further comprising a buffer unit (710) coupled to the filters (410, 420, 430) and configured to buffer the input signal, wherein a first carrier of the first-part carriers, a second carrier of the second-part carriers and a third carrier of the third-part carriers are:

    simultaneously inputted into the filters (410, 420, 430) from the buffer unit (710), and the first carrier, the second carrier and the third carrier are an $N^{th}$ carrier, an $(N+512)^{th}$ carrier and an $(N+640)^{th}$ carrier in the input signal, respectively, or
    an $N^{th}$ carrier, an $(N+512)^{th}$ carrier and an $(N+640)^{th}$ carrier in the input signal, respectively, and the buffer unit (710) is further configured to simultaneously input output values in the output signal corresponding to the first, second and third carriers to the determination circuit (440).

12. A method for detecting a carrier frequency offset, comprising:

    filtering an input signal according to a set of coefficients ($w_n$) by a Golay matched filter (300; 410, 420, 430) to generate an output signal, wherein the set of coefficients ($w_n$) is associated with a Golay complementary sequence corresponding to the input signal;
    determining a peak value of the output signal; and
    determining the carrier frequency offset according to a carrier number corresponding to the peak value.

13. The method according to claim 12, wherein the Golay complementary sequence corresponds to 128 or 512 carriers in the input signal.

14. The method according to claim 12 or 13, wherein the Golay matched filter (410, 420, 430) is a first Golay matched filter (410), the set of coefficients ($w_n$) is a first set of coefficients, and the output signal is a first output signal, the detection method further comprising:

    filtering the input signal according to a second set of coefficients by a second Golay matched filter (420) to generate a second output signal; and
    filtering the input signal according to a third set of coefficients by a third Golay matched filter (430) to generate a third output signal;
    wherein, the step of determining the peak value of the output signal determines a peak value of a sum of the first, second and third output signals.

**15.** The method according to claim 14, wherein the input signal at least comprises 768 carriers,
the step of filtering the input signal according to the first set of coefficients ($w_n$) filters 128 carriers with smaller carrier numbers among the 768 carriers,
the step of filtering the input signal according to the second set of coefficients ($w_n$) filters 512 carriers with middle carrier numbers among of the 768 carriers, and
the step of filtering the input signal according to the third set of coefficients ($w_n$) filters 128 carriers with larger carrier numbers among the 768 carriers.

| P1 | P2 | data body |

T2 data frame

## FIG. 1 (prior art)

100

110  120  130  140  150  160

Input signal → | Detection unit | → | FFT operation unit | → | iCFO detection and compensation unit | → | Descrambler | → | Demodulation unit | → | Decoding unit | → S1/S2

## FIG. 2 (prior art)

FIG. 3

400

Input3

Input2

Input1

410

420

430

**FIG. 4**

Delay 256 · Delay 128 · Delay 64 · Delay 32 · Delay 16 · Delay 8 · Delay 4 · Delay 2 · Delay 1

Delay 64 · Delay 32 · Delay 16 · Delay 8 · Delay 4 · Delay 2 · Delay 1

Delay 64 · Delay 32 · Delay 16 · Delay 8 · Delay 4 · Delay 2 · Delay 1

Output

Determination circuit

440

n_iCFO

GCS1

GCS2

GCS3

n_iCFO-382

n_iCFO

n_iCFO+385

n_iCFO-255

n_iCFO-254

n_iCFO+257

n_iCFO+258

nx

$n_{min}$

$n_{max}$

nx+512

nx+640

n

## FIG. 5

S610

Filtering input signal according to at least one set of coefficients to generate output signal

S620

Determining carrier frequency offset according to carrier number corresponding to peak value of output signal

## FIG. 6

FIG. 7

FIG. 8

**Europäisches Patentamt**
**European Patent Office**
**Office européen des brevets**

## EUROPEAN SEARCH REPORT

Application Number

EP 16 19 3073

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | 3GPP DRAFT; R1-99670, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. CHEJU; 19990609, 9 June 1999 (1999-06-09), XP050088885, [retrieved on 1999-06-09] * section 1.0, l. 3-5 * * section 5.0, l. 3-7 * | 1-15 | INV. H04L27/26 |
| X | LIU WEI-CHANG ET AL: "All-Digital Synchronization for SC/OFDM Mode of IEEE 802.15.3c and IEEE 802.11ad", IEEE TRANSACTIONS ON CIRCUITS AND SYSTEMS I: REGULAR PAPERS, IEEE, US, vol. 62, no. 2, 1 February 2015 (2015-02-01), pages 545-553, XP011571617, ISSN: 1549-8328, DOI: 10.1109/TCSI.2014.2361035 [retrieved on 2015-01-26] * abstract * * page 545, right-hand column, lines 3-5 * * section II.A, l. 6-7 * * section III, l. 1-6 * * page 547, right-hand column - page 548, left-hand column * | 1-15 | |
| X | US 2008/298435 A1 (LAKKIS ISMAIL [US]) 4 December 2008 (2008-12-04) * figures 1, 10E,15 * | 1-15 | TECHNICAL FIELDS SEARCHED (IPC) H04L |

The present search report has been drawn up for all claims

| Place of search | Date of completion of the search | Examiner |
|---|---|---|
| Berlin | 11 April 2017 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 3073

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2017

| Patent document cited in search report | Publication date | Patent family member(s) | Publication date |
|---|---|---|---|
| US 2008298435 A1 | 04-12-2008 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. M. POPOVIC.** Efficient Golay correlator. *IEEE Elec. Lett.,* August 1999, vol. 35 (17), 1427-1428